(19) Europäisches Patentamt / European Patent Office / Office européen des brevets

(11) EP 2 370 516 B1

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(21) Anmeldenummer: **09756495.9**

(22) Anmeldetag: **23.11.2009**

(51) Int Cl.:
***C08L 33/00*** *(2006.01)* ***C09D 133/00*** *(2006.01)*

(86) Internationale Anmeldenummer:
**PCT/EP2009/065624**

(87) Internationale Veröffentlichungsnummer:
**WO 2010/063599 (10.06.2010 Gazette 2010/23)**

(54) **WÄSSRIGE BINDEMITTELZUSAMMENSETZUNG ENTHALTEND OLIGOMERE**

AQUEOUS BINDER COMPOSITION COMPRISING OLIGOMERS

COMPOSITION AQUEUSE DE LIANT CONTENANT DES OLIGOMÈRES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.12.2008 EP 08170342**

(43) Veröffentlichungstag der Anmeldung:
**05.10.2011 Patentblatt 2011/40**

(73) Patentinhaber: **BASF SE**
**67056 Ludwigshafen (DE)**

(72) Erfinder:
- **ROLLER, Sebastian**
  **68199 Mannheim (DE)**
- **DERSCH, Rolf**
  **67434 Neustadt (DE)**
- **BAAH, Felix**
  **NL-1339 XP Almere (NL)**

(56) Entgegenhaltungen:
**EP-A- 1 686 160** **WO-A-99/10414**
**WO-A-02/100961**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine wässrige Bindemittelzusammensetzung enthaltend eine wässrige Polymerdispersion und Oligomere mit einer Säurezahl im Bereich von 50 bis 350, sowie Beschichtungsmittel, die eine solche Bindemittelzusammensetzung enhalten. Die Erfindung betrifft außerdem die Verwendung von wasserlöslichen Oligomeren in Mischung mit wässrige Polymerdispersionen in Beschichtungsmitteln, die zu Beschichtungen mit erhöhtem Glanz führen und ein Verfahren zur Herstellung von Beschichtungen mit erhöhtem Glanz.

Gemäß ihrer Fähigkeit, Licht zu reflektieren, werden Beschichtungen üblicherweise in vier Kategorien eingeteilt (DIN EN 13300):

1. "glänzend" mit einem Reflektometerwert von ≥60 bei einem Messwinkel von 60°,
2. "mittlerer Glanz" mit einem Reflektometerwert von < 60 bei einem Messwinkel von 60° und ≥10 bei 85°,
3. "matt" mit einem Reflektometerwert von < 10 bei einem Messwinkel von 85° und,
4. "stumpfmatt" mit einem Reflektometerwert von < 5 bei einem Messwinkel von 85°.

Die Qualität nicht pigmentierter und speziell pigmentierter Beschichtungsmittel auf Basis wässriger Polymerdispersionen hängt entscheidend vom Glanz der erhaltenen Beschichtungen ab. Es hat daher nicht an Versuchen gefehlt, diesen durch geeignete Zusätze zu verbessern. Vielfach weisen diese Zusätze jedoch den Nachteil auf, noch eine gewisse Flüchtigkeit aufzuweisen, was sich negativ auf den Anteil an flüchtigen organischen Verbindungen (VOC) der daraus erhaltenen Beschichtungen auswirkt.

Die EP 693 540 lehrt ein Aerosol-Beschichtungsmittel auf Basis einer alkoholischen/wässrigen Lösung eines thermoplastischen Polyacrylates, die wasserlösliche Acrylat-Copolymere mit Molekulargewichten im Bereich von 800 bis 10 000 g/mol und einer Glasübergangstemperatur um die 45°C enthalten können. Wesentlich für eine Aerosolbeschichtung ist, dass das Polymer löslich ist, da es anderenfalls Probleme beim Versprühen gibt. Die zugemischten Acrylat-Copolymere werden zum Polyacrylat im Gewichtsverhältnis von 40/60 bis 60/40 eingesetzt. Bei Zusatz derart hoher Mengen wasserlöslicher Acrylat-Copolymere ist eine Erhöhung des Glanzes zu beobachten.

Die EP 525 977 beschreibt eine wässrige Straßenmarkierungsfarbe enthaltend ein Bindemittelpolymer aus einem Polyacrylat und ein Hilfspolymer. Das Hilfspolymer ist ein Oligomer aus Styrolen und gegebenenfalls substituierter Acrylsäure. Das Polyacrylat wird in einer Emulsionspolymerisation in Gegenwart des Hilfspolymers hergestellt, welches als Schutzkolloid fungiert. Um ein solches emulgatorfreies Bindemittelpolymer herzustellen, sind gemäß dieser Schrift 25 Gew.-% Hilfspolymer bezogen auf den Gesamtfeststoffgehalt des Bindemittels notwendig.

Die WO 2006/079453 lehrt Hochglanzlacke auf Wasserbasis enthaltend nichtvernetzbare Oligomere mit einem Molekulargewicht von 5000 bis 15 000 Dalton und einer Glasübergangstemperatur im Bereich von 0 bis 50°C und eine Polymerdispersion mit einem mittleren Molekulargewicht größer 53 000 Dalton und einer Glasübergangstemperatur im Bereich von 10 bis 40°C.

Die WO 03/082999 beschreibt eine Farbformulierung auf Wasserbasis enthaltend eine Mischung eines nichtvernetzbaren niedermolekularen Oligomers mit einer Glasübergangstemperatur im Bereich von -50 bis 20°C und eines hochmolekularen Polymers. Der Einsatz der nicht-vernetzbaren niedermolekularen Oligomere bewirkt eine verlängerte offene Zeit der Farbformulierung.

Die WO 2006/118974 beschreibt die Herstellung von wässrigen Bindemitteln durch eine Mehrstufenemulsionspolymerisation für die Verwendung in Beschichtungszusammensetzungen. Dabei werden in einem ersten Schritt Polymere mit einer Säurezahl < 60 gebildet und anschließend neutralisiert. In Gegenwart dieser Polymere wird ein zweiter Emulsionspolymerisationsschritt durchgeführt.

Die JP 2007145990 beschreibt Dispersionen und ihre Filme mit guter Wasserbeständigkeit und hohem Glanz. Die Polymerisation erfolgt in der Gegenwart von 20 Gew.-% eines alkalilöslichen Copolymers als Schutzkolloid.

Die WO 2005121595 beschreibt eine Mehrstufenpolymerdispersion zur Herstellung von UV-härtbaren Bindemitteln für Beschichtungszusammensetzungen. Hierfür werden in einem ersten Schritt Oligomere auf Acrylat- oder Methacrylatbasis hergestellt und teilneutralisiert, anschließend in ihrer Gegenwart weitere Monomere umgesetzt und zuletzt mit einer bifunktionellen Komponente vernetzt. Das Oligomer der ersten Stufe wird dabei mit dem Polymer der zweiten Stufe in etwa gleicher Menge bzw. im Überschuss eingesetzt.

Der vorliegenden Erfindung lag die Aufgabe zugrunde, wässrige Bindemittelzusammensetzungen für den Einsatz in Anstrichmitteln mit erhöhtem Glanz zur Verfügung zu stellen. Sie sollten dabei speziell der Erhöhung des Glanzes von Glanzfarben auf Basis von Acrylatdispersionen dienen.

Überraschenderweise wurde gefunden, dass diese Aufgabe durch wässrige Bindemittelzusammensetzungen enthaltend:

- wenigstens ein Polymer P mit einer Glasübergangstemperatur Tg im Bereich von -20 bis + 60°C in Form einer wässrigen Polymerdispersion PD, die durch radikalische Emulsionspolymerisation wenigstens eines ethylenisch

ungesättigten Monomers M erhältlich ist und

- 0,1 bis 10 Gew.-% bezogen auf die Summe aus Polymer P und Oligomer, eines oder mehrerer aus ethylenisch ungesättigten Monomeren aufgebauter Oligomere mit einem mittleren Molekulargewicht $M_w$ von 1000 bis 30 000 g/mol und einer Glasübergangstemperatur $T_g$ im Bereich von +60 bis +120°C und einer Säurezahl im Bereich von 50 bis 350, gelöst wird.

Ein weiterer Gegenstand der Erfindung ist ein Verfahren zur Herstellung obiger Bindemittelzusammensetzung, indem man die oben definierte wässrige Polymerdispersion PD und eines oder mehrere der oben definierten Oligomere miteinander mischt.

Ein weiterer Gegenstand der Erfindung ist ein Beschichtungsmittel in Form einer wässrigen Zusammensetzung enthaltend:

- 10 bis 60 Gew.-% wenigstens eines Polymers P mit einer Glasübergangstemperatur $T_g$ im Bereich von -20 bis + 60°C, das durch radikalische Emulsionspolymerisation wenigstens eines ethylenisch ungesättigten Monomers M erhältlich ist und
- 0,1 bis 10 Gew.-% bezogen auf die Summe aus Polymer P und Oligomer, eines oder mehrerer aus ethylenisch ungesättigten Monomeren aufgebauter Oligomere mit einem mittleren Molekulargewicht $M_w$ von 1000 bis 30 000 g/mol und einer Glasübergangstemperatur $T_g$ im Bereich von +60 bis +120°C und einer Säurezahl im Bereich von 50 bis 350,
- bis zu 70 Gew.-% anorganische Füllstoffe und/oder anorganische Pigmente,
- 0,1 bis 20 Gew.-% übliche Hilfsmittel, und
- Wasser auf 100 Gew.-%.

Ein weiterer Gegenstand der Erfindung ist die Verwendung einer Zusammensetzung enthaltend die oben definierte wässrige Polymerdispersion PD und ein oder mehrere der oben definierten Oligomere als Komponente in Klarlacken und in Hochglanzfarben.

Ein weiterer Gegenstand der Erfindung ist ferner ein Verfahren zur Herstellung von Beschichtungen mit erhöhtem Glanz, bei dem man auf ein Substrat ein wässriges Beschichtungsmittel enthaltend

- 10 bis 60 Gew.-% wenigstens eines Polymers P mit einer Glasübergangstemperatur $T_g$ im Bereich von -20 bis + 60°C, das durch radikalische Emulsionspolymerisation wenigstens eines ethylenisch ungesättigten Monomers M erhältlich ist und
- 0,1 bis 10 Gew.-% bezogen auf die Summe aus Polymer P und Oligomer, eines oder mehrerer aus ethylenisch ungesättigten Monomeren aufgebauter Oligomere mit einem mittleren Molekulargewicht $M_w$ von 1000 bis 30 000 g/mol und einer Glasübergangstemperatur $T_g$ im Bereich von +60 bis +120°C und einer Säurezahl im Bereich von 50 bis 350,
- bis zu 70 Gew.-% anorganische Füllstoffe und/oder anorganische Pigmente,
- 0,1 bis 20 Gew.-% übliche Hilfsmittel, und
- Wasser auf 100 Gew.-%, aufträgt.

Ein weiterer Gegenstand der Erfindung ist die Verwendung von Oligomeren, die aus einem oder mehreren ethylenisch ungesättigten Monomeren aufgebaut sind, mit einem mittleren Molekulargewicht $M_w$ von 1000 bis 30 000 g/mol und einer Glasübergangstemperatur $T_g$ im Bereich von +60 bis +120°C und einer Säurezahl im Bereich von 50 bis 350, in Mischung mit der oben definierten Polymerdispersion PD, zur Erhöhung des Glanzes der daraus hergestellten Beschichtungen.

Unter der Glasübergangstemperatur $T_g$ wird hier die gemäß ASTM D 3418-82 durch Differentialthermoanalyse (DSC) ermittelte "mid-point temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Die Säurezahl (SZ) ist eine Kennzahl zur Charakterisierung des Anteils an freien organischen Säureresten. Unter Säurezahl wird die Maßzahl verstanden, die angibt wie viel Milligramm Kaliumhydroxid (KOH) zur Neutralisation von 1 g der zu bestimmenden Probe (nachfolgend des Oligomers (fest)) erforderlich sind. Die Bestimmung erfolgt nach (DIN EN ISO 2114).

Erfindungsgemäß enthält die Bindemittelzusammensetzung wenigstens ein Polymer P wie zuvor definiert oder eine Mischung mehrerer Polymere P wie zuvor definiert.

<u>Die Oligomere</u>

Erfindungsgemäß enthält die wässrige Bindemittelzusammensetzung neben der Polymerdispersion PD wenigstens 0,1 bis 10 Gew.-% eines oder mehrerer aus ethylenisch ungesättigten Monomeren aufgebauter Oligomere, bezogen auf die Summe aus Polymer P (fest) und Oligomer, mit einem mittleren Molekulargewicht $M_w$ von 1000 bis 30000 g/mol und einer Glasübergangstemperatur $T_g$ im Bereich von +60 bis +120 °C und einer Säurezahl im Bereich von 50 bis 350 mg KOH/g.

Die Oligomere mit einem mittleren Molekulargewicht $M_w$ von 1000 bis 30000 g/mol bestimmt nach Gelpermeations-Chromatographie (GPC) sind unvernetzt. Bevorzugt werden Oligomere mit einem mittleren Molekulargewicht von 1500 bis 20 000, insbesondere 2000 bis 15 000 g/mol.

Daraus ergibt sich, dass sie mit einer Säurezahl von 50 bis 350 in ammoniakalischem Wasser löslich sind. Wasserlöslich bedeutet in diesem Zusammenhang, dass sich mindestens 10 g Oligomer in einem Liter entionisierten Wasser bei einem pH >7 und einer Temperatur von 25°C lösen. Bevorzugt weisen die Oligomere eine gute Wasserlöslichkeit auf, indem sich 20 gew.-%ige Lösungen in 4 %igem Ammoniakwasser lösen.

Die erfindungsgemäß geeigneten Oligomeren werden durch radikalische Polymerisation eines oder mehrerer monoethylenisch ungesättigter Monomere mit einer Wasserlöslichkeit < 30g/l bei 25°C und 1 bar und einer oder mehrerer ethylenisch ungesättigter Carbonsäuren und gegebenenfalls bis zu 10 Gew.-% bezogen auf die Gesamtmonomere in einpolymerisierter Form sonstiger Monomere erhalten.

Geeignete monoethylenisch ungesättigte Monomere mit einer Wasserlöslichkeit < 30g/l sind die nachfolgend unter "Polymerdispersion PD" aufgeführten Monomerklassen (a) Ester $\alpha,\beta$-ethylenisch ungesättigter Mono- und Dicarbonsäuren mit $C_1$-$C_{20}$-Alkanolen und (b) Vinylaromaten.

Geeignete ethylenisch ungesättigte Carbonsäuren sind die nachfolgend in Monomerklasse (f) aufgeführten Carbonsäuren.

Als sonstige Monomere können von den beiden obigen Gruppen verschiedene Monomere eingesetzt werden, beispielsweise der Monomerklasse (h) Ester $\alpha,\beta$-ethylenisch ungesättigter Mono- und Dicarbonsäuren mit $C_2$-$C_{30}$-Alkandiolen.

Die erfindungsgemäß eingesetzten Oligomere lassen sich bevorzugt durch Substanzpolymerisation herstellen.

Bevorzugt werden die Oligomeren durch Substanzpolymerisation von

(i) mindestens eines wasserlöslichen Monomers ausgewählt unter Acrylsäure, Methacrylsäure, Fumarsäure, Maleinsäureanhydrid und Itaconsäure, insbesondere Acrylsäure und Methacrylsäure und

(ii) mindestens eines Monomers ausgewählt unter Alkylestern der Acrylsäure, Alkylester der Methacrylsäure, Acrylamiden und ihren Derivaten, Styrol, $\alpha$-Methylstyrol, Methylmethacrylat, Butylacrylat und 2-Ethylhexylacrylat

erhalten.

Oligomere und Verfahren zu ihrer Herstellung durch Substanzpolymerisation werden in der US 4414370, US 4529787 and US 4546160 ausführlich beschrieben, auf deren Offenbarung ausdrücklich Bezug genommen wird. In der Regel findet die Polymerisation in einem kontinuierlich betriebenen Rührkessel statt. Üblicherweise geschieht dies in einem Temperaturbereich von 180 bis 270°C. Die Verweilzeit der Monomermischung in der Reaktionszone beträgt in der Regel von 1 Minute bis 60 Minuten, insbesondere von 1 bis 20 Minuten. Die Polymerisation wird in der Regel thermisch durch den Zerfall eines radikalischen Initiators ausgelöst, wobei das Verhältnis Initiator/Monomer bevorzugt 0,005/1 bis 0,015/1 beträgt.

Es ist ferner möglich der Monomermischung 0 bis 25 Gew.-% der Gesamtmischung eines Lösungsmittels, bevorzugt eines hochsiedenden Lösungsmittel, zuzusetzen. Unter hochsiedend sind dabei Siedetemperaturen von $\geq$150°C, bei Normaldruck zu verstehen. Bevorzugte Lösungsmittel sind Diethylenglycolmonoethylether, Dipropylenglycolmethylether sowie hochsiedende Aromaten.

Die durch Substanzpolymerisation hergestellten Oligomere zeichnen sich durch eine enge Molekulargewichtsverteilung aus. Bevorzugt ist das Verhältnis aus $M_w/M_n$ < 5, besonders bevorzugt < 4, insbesondere im Bereich von 1,5 bis 3. Es wurde gefunden, dass Oligomere mit einer engen Molekulargewichtsverteilung sich vorteilhaft auf den Glanz der damit hergestellten Beschichtungen auswirken.

Die nach diesem Verfahren erhaltenen Oligomere weisen Glasübergangstemperaturen im Bereich von +60 bis 120°C auf.

In der Regel werden die Oligomere als Harze eingesetzt. Es ist jedoch auch möglich sie in Mischung mit feinteiligen Polystyrolpartikeln einzusetzten. Unter feinteilig sind dabei Partikelgrößen von 5 bis 200 nm, bevorzugt, 10 bis100 nm insbesondere 15 bis 75 nm zu verstehen. Polystyroldispersionen mit derartigen Partikelgrößen sind beispielsweise durch Emulsionspolymerisation von Styrol in Gegenwart dieser Oligomere erhältlich. Der Anteil an Oligomer bezogen auf die Summe aus Polystyrol und Oligomer kann dabei bis zu 10 bis 80 Gew.-%, vorzugsweise 20 bis 70 Gew.-%, besonders bevorzugt 25 bis 65 Gew.-%, betragen.

Gemäß dieser weiteren erfindungsgemäßen Ausführungsform, enthält die wässrige Bindemittelzusammensetzung

- wenigstens ein oben definiertes Polymer P,
- 0,1 bis 10 Gew.-% bezogen auf die Summe aus Polymer P und Oligomer, eines oder mehrerer aus ethylenisch ungesättigten Monomeren aufgebauter Oligomere mit einem mittleren Molekulargewicht $M_w$ von 1000 bis 30000 g/mol und einer Glasübergangstemperatur $T_g$ im Bereich von +60 bis +120°C und einer Säurezahl im Bereich von 50 bis 350 und
- 0,01 bis 15 Gew.-%, bevorzugt 0,02 bis 10 Gew.-%, Polystyrol bezogen auf das Gesamtbindemittel (fest).

Weiterhin ist es möglich, die Oligomere in Mischung mit Polymerdispersionen auf Acrylatbasis zu zusetzten, die das Oligomer in einem Anteil von 10 bis 40 Gew.-% enthalten. Derartige Polymerdispersionen sind beispielsweise von BASF SE unter dem Namen Joncryl® erhältlich.

Polymerdispersion PD

Das Polymer P hat eine Glasübergangstemperatur $T_g$ im Bereich von -20 bis +60°C. Die Polymerdispersion PD wird durch radikalische Emulsionspolymersiation wenigstens eines ethylenisch ungesättigten Monomers M erhalten.

In der Regel handelt es sich bei dem Polymer P um ein Copolymer, welches durch Copolymerisation von zwei oder mehr Monomeren M erhalten wird. Dem Fachmann ist es dabei möglich durch gezielte Wahl der Monomerzusammensetzung Polymere mit einer Glasübergangstemperatur im Bereich von -20 bis +60°C herzustellen.

Nach Fox (siehe Ullmanns Enzyklopädie der technischen Chemie, 4. Auflage, Band 19, Weinheim (1980), S. 17, 18) kann man die Glasübergangstemperatur $T_g$ abschätzen. Es gilt für die Glasübergangstemperatur von schwach bzw. unvernetzten Mischpolymerisaten bei großen Molmassen in guter Näherung:

$$\frac{1}{Tg} = \frac{X^1}{Tg^1} + \frac{X^2}{Tg^2} + \ldots\ldots \frac{X^n}{Tg^n}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, 5.ed. Weinheim, Vol. A 21 (1992) S. 169 oder aus J. Brandrup, E.H. Immergut, Polymer Handbook 3rd ed, J. Wiley, New York 1989 bekannt.

In der Regel sind die Monomere M ausgewählt unter Estern α,β-ethylenisch ungesättigter Mono- und Dicarbonsäuren mit $C_1$-$C_{20}$-Alkanolen und $C_5$-$C_{10}$ Cycloalkanolen, Vinylaromaten, Estern von Vinylalkohol mit $C_1$-$C_{30}$-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit $C_2$-$C_{30}$-Alkandiolen, Amiden α,β-ethylenisch ungesättigter Mono- und Dicarbonsäuren mit $C_2$-$C_{30}$-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit $C_1$-$C_{30}$-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, $C_2$-$C_8$-Monoolefinen, nicht aromatischen Kohlenwasserstoffen mit mindestens zwei konjugierten Doppelbindungen, Polyether(meth)acrylaten, Harnstoffgruppen aufweisenden Monomeren und Mischungen davon.

Sofern im Rahmen dieser Anmeldung von -(meth)acrylaten die Rede ist, sind sowohl die entsprechenden -acrylate, also die Derivate der Acrylsäure, wie auch die - methyacrylate, die Derivate der Methacrylsäure zu verstehen.

Geeignete Monomere sind beispielsweise:

(a): Ester α,β-ethylenisch ungesättigter Mono- und Dicarbonsäuren mit $C_1$-$C_{20}$-Alkanolen, insbesondere die Ester der Acrylsäure, Methacrylsäure, und der Ethacrylsäure, wie Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat und Lauryl(meth)acrylat.

(b): Vinylaromaten bevorzugt Styrol, 2-Methylstyrol, 4-Methylstyrol, 2-(n-Butyl)styrol, 4-(n-Butyl)styrol, 4-(n-Decyl)styrol und α-Methylstyrol und besonders bevorzugt Styrol und α-Methylstyrol.

(c): Ester von Vinylalkohol mit $C_1$-$C_{30}$-Monocarbonsäuren, wie Vinylformiat, Vinylacetat, Vinylpropionat, Vinylbutyrat, Vinyllaurat, Vinylstearat, Vinylpropionat und Versaticsäurevinylester.

(d): Ethylenisch ungesättigte Nitrile wie Acrylnitril und Methacrylnitril.

(e): Vinylhalogenide und Vinylidenhalogenide wie Vinylchlorid, Vinylidenchlorid, Vinylfluorid und Vinylidenfluorid.

(f): Ethylenisch ungesättigte Carbonsäuren und Sulfonsäuren oder deren Derivate sind Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure. Geeignete Styrol-sulfonsäuren und Derivate davon sind Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat. Besonders bevorzugt sind Acrylsäure und Methacrylsäure.

(g): Phosphorhaltige Monomere wie Vinylphosphonsäure und Allylphosphonsäure. Geeignet sind weiter die Mono- und Diester der Phosphonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl(meth)acrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hydroxypropyl(meth)acrylat, 4-Hydroxybutyl(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z. B. die Ethylenoxidkondensate von (Meth)acrylaten, wie
$H_2C{=}C(CH_3)COO(CH_2CH_2O)_nP(OH)_2$ und
$H_2C{=}C(CH_3)COO(CH_2CH_2O)_nP({=}O)(OH)_2$, worin n für 1 bis 50 steht. Weiter geeignet sind Phosphoalkylcrotonate, Phosphoalkylmaleate, Phosphoalkylfumarate, Phosphodialkyl(meth)acrylate, Phosphodialkylcrotonate und Allylphosphate. Weitere geeignete Phosphorgruppen-haltige Monomere sind in WO 99/25780 und US 4,733,005 beschrieben, worauf hier Bezug genommen wird.

(h): Ester α,β-ethylenisch ungesättigter Mono- und Dicarbonsäuren mit $C_2$-$C_{30}$-Alkandiolen wie 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat und 3-Hydroxy-2-ethylhexylmethacrylat.

(i): Primäre Amide α,β-ethylenisch ungesättigter Monocarbonsäuren wie Acrylsäureamid und Methacrylsäureamid.

(k): N-Alkylamide und N,N-Dialkylamide α,β-ethylenisch ungesättigter Monocarbonsäuren wie N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid und Morpholinyl(meth)acrylamid.

(o): Ester von α,β-ethylenisch ungesättigten Mono- und Dicarbonsäuren mit Aminoalkoholen wie N,N-Dimethylaminomethyl(meth)acrylat, N,N-Dimethylaminoethyl(meth)acrylat, N,N-Diethylaminoethylacrylat, N,N-Dimethylaminopropyl(meth)acrylat, N,N-Diethylaminopropyl(meth)acrylat und N,N-Dimethylaminocyclohexyl(meth)acrylat.

(p): Amide α,β-ethylenisch ungesättigter Mono- und Dicarbonsäuren mit Diaminen, welche mindestens eine primäre oder sekundäre Aminogruppe aufweisen wie N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)-butyl]methacrylamid, N-[2-(Diethylamino)ethyl]acrylamid, N-[4-(Dimethylamino)cyclohexyl]acrylamid und N-[4-(Dimethylamino)cyclohexyl]methacrylamid.

(s): $C_2$-$C_8$-Monoolefine und nicht aromatische Kohlenwasserstoffe mit mindestens zwei konjugierten Doppelbindungen wie Ethylen, Propylen, Isobutylen, Isopren und Butadien.

(t): Polyether(meth)acrylate sind Verbindungen der allgemeinen Formel (A)

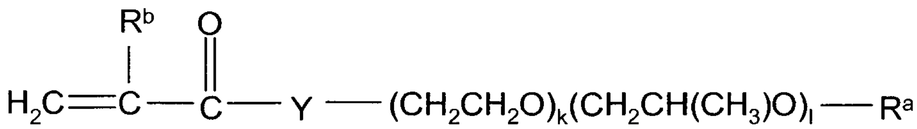

(A)

worin

die Reihenfolge der Alkylenoxideinheiten beliebig ist,

k und l unabhängig voneinander für eine ganze Zahl von 0 bis 100 stehen, wobei die Summe aus k und l mindestens 3 beträgt,

$R_a$ für Wasserstoff, $C_1$-$C_{30}$-Alkyl, $C_5$-$C_8$-Cycloalkyl oder $C_6$-$C_{14}$-Aryl steht,

$R^b$ für Wasserstoff oder $C_1$-$C_8$-Alkyl steht,

Y für O oder $NR^c$ steht, wobei $R^c$ für Wasserstoff, $C_1$-$C_{30}$-Alkyl oder $C_5$-$C_8$-Cycloalkyl steht.

Polyether(meth)acrylate sind z. B. die Polykondensationsprodukte der zuvor genannten α,β-ethylenisch ungesättigten Mono- und/oder Dicarbonsäuren und deren Säurechloriden, -amiden und -anhydriden mit Polyetherolen. Geeignete Polyetherole können leicht durch Umsetzung von Ethylenoxid, 1,2-Propylenoxid und/oder Epichlorhydrin mit einem Startermolekül, wie Wasser oder einem kurzkettigen Alkohol $R^a$-OH hergestellt werden. Die Alkylenoxide können einzeln, alternierend nacheinander oder als Mischung eingesetzt werden. Die Polyetheracrylate können allein oder in Mischungen zur Herstellung der erfindungsgemäß eingesetzten Emulsionspolymerisate verwendet werden. Geeignete Polyether(meth)acrylate sind kommerziell erhältlich, z. B. in Form verschiedener Produkte der Bezeichnung Bisomer® von Laporte Performance Chemicals, UK. Dazu zählt z. B. Bisomer ® MPEG 350 MA, ein Methoxypolyethylenglykolmonomethacrylat.

Bevorzugt werden Verbindungen der Formel (A), in denen Y für O, also eine E-therbrücke steht.

Bevorzugt werden Verbindungen der Formel (A), in denen k für eine ganze Zahl von 3 bis 50, insbesondere 4 bis 25 steht. Ebenfalls bevorzugt werden Verbindungen der Formel (A), in denenl für eine ganze Zahl von 3 bis 50, insbesondere 4 bis 25 steht. Insbesondere bevorzugt werden Verbindungen, in denen Y für O, $R^b$ für Wasserstoff oder Methyl, l für 0 (Null) und k für eine ganze Zahl von 3 bis 15, vorzugsweise 4 bis 12 steht. Insbesondere werden weiterhin bevorzugt Verbindungen, in denen Y für O, $R^b$ für Wasserstoff oder Methyl, k für 0 (Null) und l für eine ganze Zahl von 3 bis 15, vorzugsweise 4bis 12 steht.

Vorzugsweise steht $R^a$ in der Formel (A) für Wasserstoff, Methyl, Ethyl, n-Propyl, Isopropyl, n-Butyl, sec-Butyl, n-Pentyl, n-Hexyl, Octyl, 2-Ethylhexyl, Decyl, Lauryl, Palmityl oder Stearyl.

Bevorzugt steht $R^b$ in der Formel (A) für Wasserstoff, Methyl, Ethyl, n-Propyl, Isopropyl, n-Butyl, sek.-Butyl, tert.-Butyl, n-Pentyl oder n-Hexyl, insbesondere für Wasserstoff, Methyl oder Ethyl. Besonders bevorzugt steht

$R^b$ für Wasserstoff oder Methyl.

(u): Geeignete Harnstoffgruppen aufweisende Monomere wie N-Vinyl- oder N-Allylharnstoff oder Derivate des Imidazolidin-2-ons. Dazu zählen N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on (= 2-Ureido(meth)acrylat, (UMA) und N-[2-((Meth)acryloxyacetamido)ethyl]imidazolidin-2-on. Bevorzugte Harnstoffgruppen aufweisende Monomere sind N-(2-Acryloxyethyl)imidazolidin-2-on und N-(2-Methacryloxyethyl)imidazolidin-2-on. Besonders bevorzugt ist N-(2-Methacryloxyethyl)imidazolidin-2-on (2-Ureidomethacrylat, UMA).

Die zuvor genannten Monomere M können einzeln, in Form von Mischungen innerhalb einer Monomerklasse oder in Form von Mischungen aus verschiedenen Monomerklassen eingesetzt werden, soweit das Polymer P eine Glasübergangstemperatur $T_g$ im Bereich von -20 bis +60°C, bevorzugt -10 bis + 50 °C, insbesondere 0 bis 30 °C aufweist.

Die Monomere M umfassen dabei in der Regel wenigstens 80 Gew.-%, bevorzugt mindestens 85 Gew.-%, besonders bevorzugt mindestens 90 Gew.-%, eines monoethylenisch ungesättigten Monomers M1 (Hauptmonomer) mit einer Wasserlöslichkeit < 30g/l bei 25°C und 1 bar. Hierzu zählen insbesondere die Monomere der Klassen (a), (b), (c) und (s). Bevorzugt werden als Hauptmonomere M1 Monomere der Klassen (a) und (b). Vorzugsweise werden zur Emulsionspolymerisation mindestens 80 Gew.-%, besonders bevorzugt mindestens 85 Gew.-%, insbesondere mindestens 90 Gew.-%, bezogen auf das Gesamtgewicht der Monomere M, wenigstens eines Monomers M1 eingesetzt, das vorzugsweise ausgewählt ist unter Estern $\alpha,\beta$-ethylenisch ungesättigter Mono- und Dicarbonsäuren mit $C_1$-$C_{20}$-Alkanolen und Vinylaromaten. Vorzugsweise werden die Monomere M1 in einer Menge von bis zu 99,9 Gew.-%, besonders bevorzugt bis zu 99,5 Gew.-%, insbesondere bis zu 99 Gew.-%, bezogen auf das Gesamtgewicht der Monomere M, zur Emulsionspolymerisation eingesetzt.

Die Hauptmonomere M1 sind vorzugsweise ausgewählt unter Methyl(meth)acrylat, Ethyl(meth)acrylat, n-Propyl(meth)acrylat, Isopropyl(meth)acrylat, n-Butyl(meth)acrylat, sec.-Butyl(meth)acrylat, tert.-Butyl(meth)acrylat, n-Pentyl(meth)acrylat, n-Hexyl(meth)acrylat, n-Heptyl(meth)acrylat, n-Octyl(meth)acrylat, 2-Ethylhexyl(meth)acrylat, Styrol, 2-Methylstyrol und Mischungen davon.

Zusätzlich zu wenigstens einem Hauptmonomer M1 kann bei der radikalischen Emulsionspolymerisation zur Herstellung von PD wenigstens ein weiteres Monomer M2 eingesetzt werden, das eine Wasserlöslichkeit ≥30 g/l insbesondere ≥50 g/l bei 25°C und 1 bar aufweist. Diese Monomere M2 liegen allgemein in untergeordnetem Maße vor (Nebenmonomere). Bevorzugt werden als Monomere M2 Monomere der Klassen (f), (g), (h) und (i).

Vorzugsweise werden zur Emulsionspolymerisation bis zu 20 Gew.-%, besonders bevorzugt bis zu 15 Gew.-%, insbesondere bis zu 10 Gew.-%, bezogen auf das Gesamtgewicht der Monomere M, wenigstens eines Monomers M2 eingesetzt, das bevorzugt ausgewählt ist unter ethylenisch ungesättigten Mono- und Dicarbonsäuren und den Anhydriden und Halbestern ethylenisch ungesättigter Dicarbonsäuren, (Meth)acrylamiden, $C_1$-$C_{10}$-Hydroxyalkyl(meth)acrylaten, $C_1$-$C_{10}$-Hydroxyalkyl(meth)-acrylamiden und Mischungen davon. Vorzugsweise werden die Monomere M2, soweit vorhanden, in einer Menge von mindestens 0,1 Gew.-%, besonders bevorzugt mindestens 0,5 Gew.-%, insbesondere mindestens 1 Gew.-%, bezogen auf das Gesamtgewicht der Monomere M, zur Emulsionspolymerisation eingesetzt.

Besonders bevorzugt werden die Monomere M2 ausgewählt unter Acrylsäure, Methacrylsäure, Itaconsäure, Maleinsäure, Fumarsäure, Maleinsäureanhydrid, Acrylsäureamid, Methacrylsäureamid, 2-Hydroxyethylacrylat, 2-Hydroxyethylmethacrylat, 2-Hydroxyethylacrylamid, 2-Hydroxyethylmethacrylamid, und Mischungen davon.

Besonders geeignete Kombinationen an Hauptmonomeren M1 für das erfindungsgemäße Verfahren sind beispielsweise:

n-Butylacrylat und Methylmethacrylat;
n-Butylacrylat, Methylmethacrylat und Styrol;
n-Butylacrylat und Styrol;
n-Butylacrylat und Ethylhexylacrylat;
n-Butylacrylat, Ethylhexylacrylat und Styrol.

Die zuvor genannten besonders geeigneten Kombinationen an Hauptmonomeren M1 können mit besonders geeigneten Monomeren M2 kombiniert werden, die vorzugsweise ausgewählt sind unter Acrylsäure, Methacrylsäure, Acrylamid, Methacrylamid und Mischungen davon.

In einer speziellen Ausführung wird bei der radikalischen Emulsionspolymerisation zur Herstellung von PD zusätzlich zu M1 und, falls vorhanden, M2 wenigstens ein Polyether(meth)acrylat eingesetzt. Dieses wird vorzugsweise in einer Menge von 0,5 bis zu 15 Gew.-%, bevorzugt 1 bis 10 Gew.-% und insbesondere 1 bis 5 Gew.-% bezogen auf das Gesamtgewicht der Monomere M, eingesetzt. Geeignete Polyethermethacrylate sind die oben genannten Verbindungen der Polymerklasse (t). Vorzugsweise ist das Polyether(meth)acrylat ausgewählt unter Verbindungen der allgemeinen Formel (A), in der Y für O, $R^b$ für Wasserstoff oder Methyl, I für 0 (Null) und k für eine ganze Zahl von 3 bis 15, vorzugsweise 4bis 12 steht, sowie Verbindungen der allgemeinen Formel (A), in der Y für O, $R^b$ für Wasserstoff oder Methyl, k für 0 (Null) und I für eine ganze Zahl von 3 bis 15, vorzugsweise 4 bis 12 steht.

Besonders bevorzugt wird eine Polymerdispersion PD, die erhalten wird durch radikalischen Emulsionspolymerisation von Monomeren umfassend

- wenigstens ein Monomers M1,
- 0,1 bis 20 Gew.-%, bevorzugt 0,5 bis 15 Gew.-%, insbesondere 1 bis 10 Gew.-%, bezogen auf das Gesamtgewicht der Monomere M, wenigstens eines Monomers M2, das bevorzugt ausgewählt ist unter ethylenisch ungesättigten Mono- und Dicarbonsäuren und den Anhydriden und Halbestern ethylenisch ungesättigter Dicarbonsäuren, (Meth)acrylamiden, $C_1$-$C_{10}$-Hydroxyalkyl(meth)acrylaten, $C_1$-$C_{10}$-Hydroxyalkyl(meth)acrylamiden und Mischungen davon und
- 0,5 bis 15 Gew.-%, bevorzugt 1 bis 10 Gew.-% und insbesondere 1 bis 5 Gew.-% bezogen auf das Gesamtgewicht der Monomere M wenigstens eines Polyether(meth)acrylats.

In einer weiteren speziellen Ausführung wird bei der radikalischen Emulsionspolymerisation zur Herstellung von PD zusätzlich zu den Monomeren M1, gegebenenfalls M2 und gegebenenfalls dem Polyethermeth)acrylats wenigstens ein Harnstoffgruppen aufweisendes Monomer eingesetzt. Dieses wird vorzugsweise in einer Menge von 0,5 bis 15 Gew.-%, bevorzugt 1 bis 10 Gew.-% und insbesondere 1 bis 5 Gew.-% bezogen auf das Gesamtgewicht der Monomere M eingesetzt. Bevorzugte Harnstoffgruppen aufweisenden Monomere sind die zuvor in Klasse (u) genannten, insbesondere die darin als bevorzugt genannten.

Besonders bevorzugt wird eine Polymerdispersion PD, die erhalten wird durch radikalischen Emulsionspolymerisation von Monomeren umfassend

- wenigstens ein Monomers M1,
- 0,1 bis 20 Gew.-%, bevorzugt 0,5 bis 15 Gew.-%, insbesondere 1 bis 10 Gew.-%, bezogen auf das Gesamtgewicht der Monomere M, wenigstens eines Monomers M2, das bevorzugt ausgewählt ist unter ethylenisch ungesättigten Mono- und Dicarbonsäuren und den Anhydriden und Halbestern ethylenisch ungesättigter Dicarbonsäuren, (Meth)acrylamiden, $C_1$-$C_{10}$-Hydroxyalkyl(meth)acrylaten, $C_1$-$C_{10}$-Hydroxyalkyl(meth)acrylamiden und Mischungen davon und
- 0,5 bis 15 Gew.-%, bevorzugt 1 bis 10 Gew.-% und insbesondere 1 bis 5 Gew.-% bezogen auf das Gesamtgewicht der Monomere M wenigstens eines Harnstoffgruppen aufweisenden Monomers, bevorzugt ausgewählt unter den in Klasse (u) genannten.

In einer weiteren speziellen Ausführung wird bei der radikalischen Emulsionspolymerisation zur Herstellung von PD zusätzlich Acetoacetoxyethylmethacrylat zu den Monomeren M1, gegebenenfalls M2, gegebenenfalls dem Polyethermeth)acrylaten und gegebenenfalls dem Harnstoffgruppen aufweisenden Monomer eingesetzt. Dieses wird vorzugsweise in einer Menge von 0,5 bis 15 Gew.-%, bevorzugt 1 bis 10 Gew.-% und insbesondere 1 bis 5 Gew.-% bezogen auf das Gesamtgewicht der Monomere M eingesetzt.

Bei der Herstellung der erfindungsgemäßen Polymerdispersionen kann zusätzlich zu den zuvor genannten Monomeren M wenigstens ein Vernetzer eingesetzt werden. Monomere, die eine vernetzende Funktion besitzen, sind Verbindungen mit mindestens zwei polymerisierbaren, ethylenisch ungesättigten, nichtkonjugierten Doppelbindungen im Molekül. Eine Vernetzung kann auch z. B. durch photochemische Aktivierung erfolgen. Dazu kann zur Herstellung von PD zusätzlich wenigstens ein Monomeren mit photoaktivierbaren Gruppen eingesetzt werden. Fotoinitiatoren können auch separat zugesetzt werden. Eine Vernetzung kann auch z. B. durch funktionelle Gruppen erfolgen, welche mit dazu komplementären funktionellen Gruppen eine chemische Vernetzungsreaktion eingehen können. Dabei können die komplementären Gruppen beide an das Emulsionspolymerisat gebunden sein, und zur Vernetzung kann ein Vernetzer eingesetzt werden, der befähigt ist, mit funktionellen Gruppen des Emulsionspolymerisats eine chemische Vernetzungsreaktion eingehen zu können.

Geeignete Vernetzer sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000 g/mol. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten $C_3$-$C_6$-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Vernetzer sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20 000 g/mol.

Als Vernetzer sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, Itaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Vernetzer sind Divinyldioxan, Tetraallylsilan oder Tetravinylsilan. Selbstverständlich können auch Mischungen der vorgenannten Verbindungen eingesetzt werden.

Weiterhin zählen zu den vernetzenden Monomeren auch solche, die neben einer ethylenisch ungesättigten Doppelbindung eine reaktive funktionelle Gruppe, z. B. eine A)-dehydgruppe, eine Ketogruppe oder eine Oxirangruppe aufweisen, die mit einem zugesetzten Vernetzer reagieren können. Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfasst, z. B. (Meth)acryloxyalkylpropanale, wie sie in der DE-A-2722097 beschrieben sind. Des Weiteren eignen sich auch N-Oxoalkyl(meth)acrylamide wie sie z. B. aus der US-A-4226007, der DE-A-2061213 oder DE-A-2207209 bekannt sind. Besonders bevorzugt sind Acetoacetyl(meth)acrylat, Acetoacetoxyethyl(meth)acrylat und insbesondere Diacetonacrylamid. Bei den Vernetzern handelt es sich vorzugsweise um eine Verbindung mit mindestens zwei funktionellen Gruppen, insbesondere zwei bis fünf funktionellen Gruppen, die mit den funktionellen Gruppen des Polymerisats, speziell den Keto- oder Aldehydgruppen, eine Vernetzungsreaktion eingehen können. Dazu zählen z. B. Hydrazid-, Hydroxylamin- oder Oximether- oder Aminogruppen als funktionelle Gruppen für die Vernetzung der Keto- oder Aldehydgruppen. Geeignete Verbindungen mit Hydrazidgruppen sind z. B. Polycarbonsäurehydrazide mit einem Molgewicht von bis zu 500 g/mol. Besonders bevorzugte Hydrazidverbindungen sind Dicarbonsäuredihydrazide mit bevorzugt 2 bis 10 C-Atomen. Dazu zählen z. B. Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazinsäuredihydrazid und Isophthalsäuredihydrazid. Geeignete Verbindungen mit Hydroxylamin- oder Oximethergruppen sind z. B. in WO 93/25588 genannt.

Auch durch eine entsprechende Additivierung der wässrigen Polymerdispersion PD) kann zusätzlich eine Oberflächenvernetzung erzeugt werden. Dazu zählt z. B. Zugabe eines Photoinitiators oder Sikkativierung. Als Photoinitiatoren kommen solche in Frage, die durch Sonnenlicht angeregt werden, beispielsweise Benzophenon oder Benzophenonderivate. Zur Sikkativierung eignen sich die für wässrige Alkydharze empfohlenen Metallverbindungen, beispielsweise auf Basis von Co oder Mn (Überblick in U. Poth, Polyester und Alkydharze, Vincentz Network 2005, S 183 f).

Die vernetzende Komponente wird vorzugsweise in einer Menge von 0,0005 bis 5 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (einschließlich des Vernetzers), eingesetzt.

Eine spezielle Ausführungsform sind Polymerdispersionen PD, die keinen Vernetzer einpolymerisiert enthalten.

Die radikalische Polymerisation des Monomergemischs M kann in Gegenwart mindestens eines Reglers erfolgen. Regler werden vorzugsweise in einer Einsatzmenge von 0,0005 bis 5 Gew.-%, besonders bevorzugt von 0,001 bis 2,5 Gew.-% und insbesondere von 0,01 bis 1,5 Gew.-%, bezogen auf das Gesamtgewicht der zur Polymerisation eingesetzten Monomere, eingesetzt.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Polymeren, ohne die Bruttoreaktions-Geschwindigkeit zu beeinflussen. Bei den Reglern kann man zwischen mono-, bi- oder polyfunktionalen Reglern unterscheiden, je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd und Isobutyraldehyd.

Ferner können auch als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Halogenverbindungen, z. B. Alkylhalogenide wie Tetrachlormethan, Chloroform, Bromtrichlormethan, Bromoform, Allylbromid und Benzylverbindungen wie Benzylchlorid oder Benzylbromid.

Weitere geeignete Regler sind Allylverbindungen, wie z. B. Allylalkohol, funktionalisierte Allylether, wie Allylethoxylate, Alkylallylether oder Glycerinmonoallylether.

Bevorzugt werden als Regler Verbindungen eingesetzt, die Schwefel in gebundener Form enthalten.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen erhalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bisthioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Alle genannten Regler können einzeln oder in Kombination miteinander eingesetzt werden. Eine spezielle Ausführungsform betrifft Polymerdispersionen PD, die durch radikalische Emulsionspolymerisation ohne Zusatz eines Reglers hergestellt werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxodisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, 2,2'-Azo-bis-(2-amidinopropan)dihydrochlorid oder 2-2'-Azo-bis-(2-methyl-butyronitril). Geeignet sind auch Gemische dieser Initiatoren.

Als Initiatoren können auch Reduktions-/Oxidations-(= Red-Ox)-Initiator Systeme eingesetzt werden. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponente handelt es sich z. B. um Alkalimetallsalze der schwefligen Säure, wie z. B. Natriumsulfit, Natriumhydrogensulfit, Alkalisalze der dischwefligen Säure

wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im Allgemeinen 0,1 bis 10 Gew.-%, bevorzugt 0,1 bis 5 Gew.-%, bezogen auf alle zu polymerisierenden Monomeren. Es können auch mehrere, verschiedene Initiatoren bei der Emulsionspolymerisation Verwendung finden.

Die Herstellung der Polymerdispersion PD, erfolgt üblicherweise in Gegenwart wenigstens einer grenzflächenaktiven Verbindung. Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (EO-Grad: 2 bis 50, Alkylrest: $C_{12}$-$C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-$C_6$-$C_{20}$-Alkylpyridinen, -morpholinen oder -imidazolen, z. B. N-Laurylpyridiniumchlorid.

Die Menge an Emulgator beträgt im Allgemeinen etwa 0,01 bis 10 Gew.-%, bevorzugt 0,1 bis 5 Gew.-%, bezogen auf die Menge an zu polymerisierenden Monomeren.

Den Polymerdispersionen PD können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF Aktiengesellschaft), Komplexbildner, Desodorantien, Geschmacksstoffe, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Die Polymerisation erfolgt im Allgemeinen bei Temperaturen in einem Bereich von 0 bis 150 °C, bevorzugt 20 bis 100 °C, besonders bevorzugt 30 bis 95 °C. Die Polymerisation erfolgt vorzugsweise bei Normaldruck, möglich ist jedoch auch eine Polymerisation unter erhöhtem Druck, beispielsweise dem Eigendruck der zur Polymerisation eingesetzten Komponenten. In einer geeigneten Ausführung erfolgt die Polymerisation in Gegenwart wenigstens eines Inertgases, wie z. B. Stickstoff oder Argon.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem

Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Neben der saatfreien Herstellung der Polymerdispersion PD ist es nach einer weiteren Ausführungsform möglich Polymerdispersionen PD mit einer definierten Teilchengröße mittels einer Emulsionspolymerisation nach dem Saat-Latex-Prozess oder in Gegenwart eines in situ hergestellten Saat-Latex herzustellen. Derartige Polymerisationsverfahren sind bekannt und beispielsweise in der EP-B 40419, EP-A-614 922, EP-A-567 812 und der darin zitierten Literatur beschrieben, sowie in "Encyclopedia of Polymer Science and Technology", Vol. 5, John Wiley & Sons Inc., New York 1966, p. 847. Die Polymerisation wird bevorzugt in der Gegenwart von 0,01 bis 3 Gew.-%, bevorzugt 0,02 bis 1,5 Gew.-% eines Saatlatex (der Feststoffgehalt des Saatlatex basiert auf der Menge an Gesamtmonomer) durchgeführt. Bevorzugt wird der Saatlatex anfangs zugegeben. Ferner kann der Saatlatex in situ aus einer kleinen Menge der zur Polymerisation vorgesehenen Monomeren in wässriger Emulsion zusammen mit einer oberflächenaktiven Substanz hergestellt werden durch Erhitzen dieser Emulsion auf Polymerisationstemperatur und Zugabe eines Teil des Initiators.

Die bei der Polymerisation entstandenen Dispersionen können im Anschluss an den Polymerisationsprozess einer physikalischen oder chemischen Nachbehandlung unterworfen werden. Solche Verfahren sind beispielsweise die bekannten Verfahren zur Restmonomerenreduzierung, wie z. B. die Nachbehandlung durch Zusatz von Polymerisationsinitiatoren oder Mischungen mehrerer Polymerisationsinitiatoren bei geeigneten Temperaturen, eine Nachbehandlung der Polymerlösung mittels Wasserdampf oder Ammoniakdampf, oder Strippen mit Inertgas oder Behandeln der Reaktionsmischung mit oxidierenden oder reduzierenden Reagenzien, Adsorptionsverfahren wie die Adsorption von Verunreinigung an ausgewählten Medien wie z. B. Aktivkohle oder eine Ultrafiltration.

Das Polymer P, welches durch Emulsionspolymerisation wenigstens eines ethylenisch ungesättigten Momomers M erhältlich ist, hat vorzugsweise eine Glasübergangstemperatur $T_g$ kleiner als 50 °C, besonders bevorzugt kleiner als 40 °C, insbesondere kleiner als 35 °C.

Die wässrige Polymerdispersion PD weist üblicherweise einen Feststoffgehalt von 20 bis 65 Gew.-%, vorzugsweise 35 bis 60 Gew.-% auf.

Die Bindemittelzusammensetzung

Unter wässriger Bindemittelzusammensetzung ist im Rahmen dieser Anmeldung zu verstehen, dass das die kontinuierliche Phase dieser Zusammensetzung zu mehr als 90 Gew.-%, bevorzugt 95 Gew.-%, insbesondere ausschließlich aus Wasser besteht. Weiterhin können mit Wasser mischbare Flüssigkeiten wie wasserlösliche Monoalkohole z.B. Isooctanol, Diol wie Diglyme und Polyole Bestandteil der kontinuierlichen Phase sein.

Vorzugsweise enthält die Bindemittelzusammensetzung weniger als 15 Gew.-% insbesondere weniger als 10 Gew.-%, bezogen auf das Gesamtbindemittel (fest), Polymere, die von den vorgenannten Polymeren verschieden sind.

Die Zugabe des Oligomers zur Herstellung der Bindmittelzusammensetzung erfolgt bevorzugt zur Polymerdispersion PD, also nach der Emulsionspolymerisation. Eine Zugabe zur Polymerdispersion PD umfasst dabei auch eine Zugabe im Rahmen der Formulierung eines Beschichtungsmittels, das ein Polymer P enthält.

Die erfindungsgemäße Bindemittelzusammensetzung weist üblicherweise einen Feststoffgehalt von 20 bis 65 Gew.-%, vorzugsweise 35 bis 60 Gew.-% auf.

Die erhaltene wässrige Bindemittelzusammensetzung kann als solche oder gemischt mit weiteren, in der Regel filmbildenden Polymeren, in wässrigen Beschichtungsmitteln, wie Farb- oder Lackmischungen, verwendet werden. So führt sie in Formulierungen für Beschichtungsmittel insbesondere in Formulierungen von Glanzfarben und Hochglanzfarben auf Basis von Acrylatdispersionen zu einer Erhöhung des Glanzes.

Beschichtungsmittel

Ein weiterer Gegenstand der Erfindung ist ein Beschichtungsmittel in Form einer wässrigen Zusammensetzung enthaltend:

- 10 bis 60 Gew.-% wenigstens eines Polymers P (fest) mit einer Glasübergangstemperatur $T_g$ im Bereich von -20 bis + 60°C, das durch radikalische Emulsionspolymerisation wenigstens eines ethylenisch ungesättigten Monomers M erhältlich ist und
- 0,1 bis 10 Gew.-% bezogen auf die Summe aus Polymer P und Oligomer, eines oder mehrerer aus ethylenisch ungesättigten Monomeren aufgebauter Oligomere mit einem mittleren Molekulargewicht $M_w$ von 1000 bis 30 000 g/mol und einer Glasübergangstemperatur $T_g$ im Bereich von +60 bis +120°C und einer Säurezahl im Bereich von

50 bis 350,

- bis zu 70 Gew.-%, bevorzugt 10 bis 70 Gew.-% anorganische Füllstoffe und/oder anorganische Pigmente,
- 0,1 bis 20 Gew.-% übliche Hilfsmittel, und
- Wasser auf 100 Gew.-%.

Unter wässrigem Beschichtungsmittel ist im Rahmen dieser Anmeldung zu verstehen, dass die kontinuierliche Phase des Beschichtungsmittels zu mehr als 80 Gew.-% bevorzugt 90 Gew.-% insbesondere ausschließlich aus Wasser besteht. Weiterhin können wassermischbare Flüssigkeiten wie wasserlösliche Monoalkohole z.B. Isooctanol, Diol wie Diglyme und Polyole Bestandteil der kontinuierlichen Phase sein.

Zusätzlich zu der Polymerdispersion PD kann die Bindemittelzusammensetzung des Beschichtungsmittels wenigstens ein weiteres filmbildendes Polymer aufweisen. Dazu zählen z. B. Alkydharze. Geeignete Alkydharze sind z. B. wasserlösliche Alkydharze, die vorzugsweise ein gewichtsmittleres Molekulargewicht von 5000 bis 40 000 aufweisen. Geeignet sind weiterhin Alkydharze mit einem gewichtsmittleren Molekulargewicht von mehr als 40 000, speziell von mehr als 100 000. Unter einem Alkydharz versteht man einen Polyester, der mit einem trocknenden Öl, einer Fettsäure oder dergleichen verestert ist (U. Poth, Polyester und Alkydharze, Vincentz Network 2005). Geeignete wasserlösliche Alkydharze sind Alkydharze mit ausreichend hoher Säurezahl, vorzugsweise im Bereich von 30-65 mg KOH/g. Diese können gegebenenfalls teilweise oder vollständig neutralisiert vorliegen. Das gewichtsmittlere Molekulargewicht beträgt vorzugsweise 8000 bis 35 000 und besonders bevorzugt 10 000 bis 35 000.

Der Einsatz von solchen weiteren filmbildenden Polymeren, speziell Alkydharzen, die den VOC-Gehalt der Beschichtungsmittel erhöhen, ist nicht bevorzugt. Bevorzugt ist daher ein Beschichtungsmittel, das wenigstens eine Polymerdispersion PD und wenigstens ein Oligomer, jedoch kein von dem in der Polymerdispersion enthaltenen Emulsionspolymerisat verschiedenes filmbildendes Polymer aufweist.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems (Dispersionsfarbe oder Dispersionslackfarbe) vor. Der Anteil der Pigmente kann durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: $PVK = (V_P + V_F) \times 100 / (V_P + V_F + V_B)$. Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | 65-80 |
| Halbglanzfarbe, seidenmatt | ca. 35 |
| Halbglanzfarbe, seidenglänzend | ca. 25 |
| Hochglanzfarbe | 12-30 |
| Außenfassadenfarbe, weiß | 30-65 |
| Klarlack | 0 |

Im Folgenden wird die Zusammensetzung einer üblichen Dispersionsfarbe erläutert. Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa

a) 3 bis 90 Gew.-%, insbesondere 10 bis 60 Gew.-%, auf das Polymer P,
b) 5 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel.

Besonders bevorzugt eignen sich die erfindungsgemäßen Bindemittelzusammensetzungen als Komponente in Klarlacken und in hochglänzenden Dispersionslackfarben mit einer PVK im Bereich von 12 - 30, vorzugsweise 15 - 30.

Besonders bevorzugt werden Beschichtungsmittel in Form einer wässrigen Zusammensetzung enthaltend 20 bis 50 Gew.-% -des Polymers P (fest), 0,1 bis 10 Gew.-% bezogen auf die Summe aus Polymer P und Oligomer, eines oder mehrerer aus ethylenisch ungesättigten Monomeren aufgebauter Oligomere, 10 bis 30 Gew.-% anorganische Füllstoffe und/oder anorganische Pigmente, 0,1 bis 20 Gew.-% übliche Hilfsmittel und Wasser auf 100 Gew.-%.

Ein weiterer Gegenstand der Erfindung ist ferner ein Verfahren zur Herstellung von Beschichtungen mit erhöhtem Glanz, bei dem man auf ein Substrat ein erfindungsgemäßes wässriges Beschichtungsmittel aufbringt.

Als Pigment werden im Rahmen dieser Erfindung zusammenfassend alle Pigmente und Füllstoffe, z. B. Farbpigmente, Weißpigmente und anorganische Füllstoffe bezeichnet. Dazu zählen anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Der Anteil der Pigmente kann, wie zuvor beschrieben, durch die Pigmentvolumenkonzentration (PVK), beschrieben werden. Erfindungsgemäße Beschichtungsmittel in Form von Hochglanzlacken haben z. B. eine PVK im Bereich von 12 bis 35 %, vorzugsweise 15 bis 30 %.

Das erfindungsgemäße Beschichtungsmittel (wässrige Anstrichmittel) kann neben der Polymerdispersion PD, dem Oligomer, Pigment und gegebenenfalls zusätzlichen filmbildenden Polymeren noch weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-% Verdicker, bezogen auf Feststoffgehalt des Anstrichmittels.

Weiterhin geeignete Hilfsmittel sind Filmbildehilfs- oder Koaleszenzhilfsmittel. Bevorzugt werden beispielsweise Testbenzin, Ethylenglykol, Propylenglykol, Glycerin, Ethanol, Methanol, wassermischbare Glykolether und deren Acetate wie Diethylenglykol, 1-Methoxy-2-propanol, 2-Amino-2-methyl-1-propanol, Isooctanol, Butylglykol, Butyldiglykol, Diethylenglykol-Monobutylether, Dipropylenglykolmonomethyl- oder Dipropylenglykolmonobutylether, Dipropylenglykol-methylether, Dipropylenglykol-propylether, Dipropylenglykol-n-butylether, Tripropylenglykol-n-butylether, Propylenglykolphenylether, Butylglykolacetat, Butyldiglykolacetat, 2,2,4-Trimethyl-1,3-pentandiolmonoisubutyrat, Disobutylester langkettiger Dicarbonsäuren wie Lusolvan® FBH oder Tripropylenglykolmonoisobutyrat eingesetzt.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf den Feststoffgehalt des Anstrichmittels. Bei den flüchtigen Bestandteilen handelt es sich vorwiegend um Wasser.

Geeignete Anstrichmittel sind hochglänzende Anstrichmittel. Die Bestimmung des Glanzes des Anstrichmittels kann nach DIN EN ISO 2813 erfolgen. Hierbei wird das Anstrichmittel mit 240 $\mu$m Spaltweite auf eine Glasplatte aufgetragen und 72 Stunden lang bei Raumtemperatur getrocknet. Der Prüfkörper wird in ein kalibriertes Reflektometer eingesetzt, und bei definiertem Einfallswinkel wird festgestellt, inwieweit das zurückgeworfene Licht reflektiert oder gestreut worden ist. Der ermittelte Reflektometerwert ist ein Maß für den Glanz (je höher der Wert, desto höher der Glanz).

Der Glanz der Hochglanzlacke ist vorzugsweise größer 60 bei 20° und größer 80 bei 60°. Der Reflektometerwert wird bestimmt bei 23°C und dimensionslos angegeben in Abhängigkeit vom Einfallswinkel, z. B. 40 bei 20°.

Das erfindungsgemäße Anstrichmittel kann in üblicher Weise auf Substrate aufgebracht werden, z. B. durch Streichen, Spritzen, Tauchen, Rollen, Rakeln etc.

Es wird vorzugsweise als Bautenanstrichmittel, d. h. zum Beschichten von Gebäuden oder Gebäudeteilen

verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Vorzugsweise findet das Anstrichmittel für Gebäudeinnenteile, z. B. Innenwände, Innentüren, Vertäfelungen, Treppengeländer, Möbel etc. Verwendung.

Die erfindungsgemäßen Anstrichmittel zeichnen sich aus durch einfache Handhabung, gute Verarbeitungseigenschaften und hohes Deckvermögen. Die Anstrichmittel sind schadstoffarm. Sie haben gute anwendungstechnische Eigenschaften, z. B. eine gute Wasserfestigkeit, gute Nasshaftung, insbesondere auch auf Alkydfarben, gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung wird anhand der folgenden nicht einschränkenden Beispiele näher erläutert.

Beispiele:

Herstellung einer Polymerdispersion PD

Beispiel A

In einem mit Dosiervorrichtung und Temperaturregelung ausgerüsteten Polymerisationsgefäß wurden vorgelegt:

Vorlage:

| | |
|---|---|
| 528,0 g | Wasser |
| 46,7 g | einer Polystyrolsaatdispersion mit einem Feststoffgehalt von 33 Gew.-% und einer mittleren Teilchengröße von 30 nm |
| 3,67 g | einer 15 gew.-%igen wässrigen Lösung von Natriumlaurylsulfat |

Danach wurde unter Rühren auf 85 °C erhitzt. Anschließend wurde, unter Aufrechterhaltung dieser Temperatur 5 Gew.-% von Zulauf 2 zugegeben und 5 min gerührt. Anschließend wurde Zulauf 1 über einen Zeitraum vom 180 Minuten zudosiert. Gleichzeitig wurde die Restmenge von Zulauf 2 über einen Zeitraum von 195 Minuten zudosiert.

Zulauf 1.

| | |
|---|---|
| 543,2 g | Wasser |
| 125,4 g | einer 15 gew.-%igen wässrigen Lösung von Natriumlaurylsulfat |
| 458,0 g | n-Butylacrylat |
| 399,6 g | Methylmethacrylat |
| 165,1 g | Styrol |
| 22,78 g | Methacrylsäure |
| 21,45 g | Ureidomethacrylat (N-(2-Methacryloxyethyl)imidazolidin-2-on) |
| 33,0 g | Bisomer MPEG 350 MA (Methoxypolyethylenglykolmonomethacrylat der Fa. Laporte Performance Chemicals UK) |

Zulauf 2:

| | |
|---|---|
| 83,6 g | Wasser |
| 4,4 g | Natriumperoxodisulfat |

Nach Beendigung von Zulauf 1 wurden 22 g Wasser zugegeben. Nach Beendigung von Zulauf 2 wurde 30

Minuten nachpolymerisiert und mit 7,47 g einer 25 %igen wässrigen Ammoniaklösung neutralisiert. Danach wurde 13,2 g einer 5 gew.-%igen wässrigen Wasserstoffperoxidlösung zugegeben und eine Lösung von 0,557 g Ascorbinsäure in 4,96 g Wasser in 60 min zudosiert. Danach ließ man die Dispersion abkühlen und filtrierte über einen 125 μm-Filter. Es wurden 2,48 kg einer wässrigen Polymerdispersion erhalten, die einen Feststoffgehalt von 46 % aufwies. Für das Polymer wurde mittels DSC eine Glasübergangstemperatur von 32 °C bestimmt.

Erfindungsgemäße Bindemittelzusammensetzung

Beispiele 1 a

Der gemäß Beispiel A erhaltenen Polymerdispersion wurden anschließend 1 Gew.-% bezogen auf das Polymer (fest) einer 31 gew.-%ige wässrige (ammoniakalischen Lösung eines Oligomers der Monomerzusammensetzung 23,5 Gewichtsteile Styrol, 33,5 Gewichtsteile $\alpha$-Methylstyrol, 5,5 Gewichtsteile 2-Ethylhexylacrylat und 31,9 Gewichtsteile Acrylsäure zugemischt. Das Oligomer wurde analog Beispiel 1 der US 4414370 hergestellt. Es weist eine Glasübergangstemperatur von 117 °C, eine Säurezahl von 224 KOH/g und ein Mw von 9200 g/mol auf.
Die Mengen in denen das wasserlösliche Oligomer zugesetzt wurde betrug 1 Gew.-% bezogen auf die Summe aus Polymer P (Bindemittelpolymer fest) und Oligomer.

Beispiel 2a, b, c

Der Polymerdispersion aus Beispiel A wurden 1 Gew.-% (Bsp. 2a), 2,5 Gew.-% (Bsp. 2b) bzw. 5 Gew.-% (Bsp. 2c) einer Polystyroldispersion mit einer HDC-Teilchengröße von 50 nm enthaltend ein Oligomer (fest bezogen auf Feststoff der Polymerdispersion aus Beispiel A). Die Polystyroldispersion wurde durch Polymerisieren von Styrol in Gegenwart des in Beispiel 1 a beschriebenen Oligomers hergestellt.
Die Mengen, in denen das wasserlösliche Oligomer zugesetzt, wurde betrugen 0,6 Gew.-%, 1,5 Gew.-% bzw. 3 Gew. bezogen auf die Summe aus Polymer P (Bindemittelpolymer fest) und Oligomer.

Beispiel 3a,b

Der Polymerdispersion wurden 1 Gew.-% und 2,5 Gew.-% jeweils bezogen auf die Bindemittelzusammensetzung (fest) Joncryl 8064 zugemischt.

Beispiel 4a-c

Der Polymerdispersion wurden 1 Gew.-%, 2,5 Gew.-% und 5 Gew.-% jeweils bezogen auf die Bindemittelzusammensetzung (fest) Joncryl 77 zugemischt.

III. Anwendungstechnische Beispiele

1. Allgemeines Vorschrift zur Herstellung von Beschichtungsmittel

Die einzelnen Komponenten (Herstellernachweis s. Tabelle 1) wurden in der Menge (Gewichtsteile) und Reihenfolge, wie in Tabelle 2 angegeben, unter Rühren mit einem Zahnscheibenrührer zudosiert. Nach Zugabe des Titandioxidpigments, wurde die Drehzahl auf 2000 Upm erhöht und solange dispergiert, bis die Paste glatt, d. h. frei von Klümpchen war. Man erhielt 66 Gewichtsteile einer Paste.
Diese Paste ließ man, falls erforderlich, auf Raumtemperatur abkühlen und gab die restlichen Komponenten, die in Tabelle 3 aufgeführt sind, in den darin angegebenen Mengen und dieser Reihenfolge bei reduzierter Drehzahl zu. Man erhielt 200 Gewichtsteile eines wässrigen Beschichtungsmittels.
Ausgehend von der Polymerdispersion PD wurde das Beschichtungsmittel B0 erhalten. Ausgehend von den erfindungsgemäßen Oligomer enthaltenden Bindemittelzusammensetzungen der Beispiel 1 a, 2a-c, 3a-c und 4a-c wurden die Pigment enthaltenden Beschichtungsmittel B1a-c, B2a-c, B3a-c und B4a-c erhalten.

Tabelle 1

| Funktion | Name | Hersteller |
|---|---|---|
| Dispergiermittel | Disperbyk® 190 (hochmolekulares Blockcopolymer mit pigmentaktiven Gruppen) | Byk-Chemie GmbH, Wesel |

(fortgesetzt)

| Funktion | Name | Hersteller |
|---|---|---|
| Entschäumer | Byk® 020 (Polysiloxan) | Byk-Chemie GmbH, Wesel |
| | Tego Airex® 902W (kieselsäurehaltiges Poly(ethersiloxan)-Copolymer | Tego Chemie, Essen |
| Titandioxidpigment | Kronos® 2190 | Kronos Titan GmbH, Leverkusen |
| Verdicker | DSX 2000 und DSX 1514 (Assoziativ-Verdicker auf Polyurethanbasis) | Cognis Deutschland GmbH & Co. KG, Düsseldorf |

Tabelle 2: Formulierung der Paste

| Komponente | Name | Menge [g] |
|---|---|---|
| Wasser | | 10,72 |
| Entschäumer | Byk® 020 | 0,96 |
| Dispergiermittel | Disperbyk® 190 | 4,7 |
| Verdicker | DSX 2000/1514 (1:0.3) | 2,46 |
| Titandioxidpigment | Kronos® 2190 | 47,16 |
| Gesamt (Paste) | | 66 |

Tabelle 3: Komponenten des Beschichtungsmittels

| Komponente | | Menge |
|---|---|---|
| Wässrige Paste | | 66 |
| Wasser | | 7,7 -x [1)] |
| Lösemittel | Propylenglycol | 4,36 |
| Entschäumer | Tego Airex® 902W | 0,04 |
| Wässrige Bindemittelzusammensetzung | | 121,9 + x [1)] |
| Gesamt | | 200,0 |

[1)] Der Wert 121,9, d.h. x = 0 gilt für das Vergleichsbeispiel B0, d.h. für die reine Polymerdispersion PD mit Feststoffgehalt 46% ohne zugesetztes Oligomer. Die die Oligomeren enthaltenden Zusammensetzungen wiesen zum Teil einen niedrigeren bzw. höheren Feststoffgehalt auf, so daß durch Zumischung zur Polymerdispersion PD eine Zusammensetzung mit gegenüber der Ausgangsdispersion PD erniedrigtem bzw. erhöhtem Feststoffgehalt erhalten wurde. Um bei der Farbformulierung jeweils dieselbe Menge an Bindemittel (fest) einzusetzen, wurde entsprechend mehr bzw. weniger von der abgemischten Zusammensetzung eingesetzt. Der sich hierdurch ergebende zusätzliche bzw. verringerte Wassereintrag wurde durch Abzug bzw. Hinzufügen von der bei der Farbformulierung zugesetzten Wassermenge (7,7 bei der Formulierung mit der reinen Polymerdispersion PD) korrigiert.

2. Prüfung der wässrigen Pigment enthaltenden Beschichtungsmittel B1a, B2a-c, B3a,b und B4a-c

Die Bestimmung des Glanzes des Anstrichmittels erfolgt nach DIN EN ISO 2813: Das Anstrichmittel wird mit 240 μm Spaltweite auf eine Glasplatte aufgetragen und 72 Stunden lang bei Raumtemperatur getrocknet. Der Prüfkörper wird in ein kalibriertes Reflektometer Typ haze-gloss (Fa. Byk-Gardner, Geretsried) eingesetzt und der Reflektometerwert bei 20° und 60° Einstrahlwinkel sowie der Haze (Glanzschleier) abgelesen. Der ermittelte Reflektometerwert ist ein Maß für den Glanz (je höher der Wert ist, desto höher ist der Glanz). Der Glanzschleier ist ein Maß für die diffuse Reflektion (je niedriger der Wert, desto höher ist der Glanz).

Tabelle 4:

| Beschichtungs-mittel | Bindemittelzusammensetzung | Wasser x [g] | *[Gew-%] | Glanz (60°) | Glanz (20°) | Haze |
|---|---|---|---|---|---|---|
| B0 | PD | - | - | 77,5 | 52,2 | 187 |
| B1a | 1a | - | 1 | 88.8 | 71,5 | 59,3 |
| B2a | 2a | -1,1 | 0,6 | 78,8 | 60,7 | 129 |
| B2b | 2b | -2,5 | 1,5 | 84 | 66,9 | 105 |
| B2c | 2c | 2,0 | 3 | 89,4 | 78,2 | 25,5 |
| B3a | 3a | -0,4 | 0,2 | 86,3 | 60,8 | 79,5 |
| B3b | 3b | 0,1 | 0,6 | 88,6 | 69,2 | 58,5 |
| B4a | 4a | 0,8 | 0,1 | 83,6 | 55,7 | 87,8 |
| B4b | 4b | 1,5 | 0,2 | 88,4 | 72,3 | 33,3 |
| B4c | 4c | 1,2 | 0,6 | 89,2 | 74,6 | 29,8 |

*Gew.-% Oligomer bezogen auf die Summer aus Polymer P (fest) und Oligomer.

**Patentansprüche**

1. Wässrige Bindemittelzusammensetzung enthaltend:

   - wenigstens ein Polymer P mit einer Glasübergangstemperatur $T_g$ im Bereich von -20 bis + 60°C in Form einer wässrigen Polymerdispersion PD, die durch radikalische-Emulsionspolymerisation wenigstens eines ethylenisch ungesättigten Monomers M erhältlich ist und
   - 0,1 bis 10 Gew.-% bezogen auf die Summe aus Polymer P und Oligomer, eines oder mehrerer aus ethylenisch ungesättigten Monomeren aufgebauter Oligomere mit einem mittleren Molekulargewicht $M_w$ von 1000 bis 30000 g/mol und einer Glasübergangstemperatur $T_G$ im Bereich von +60 bis +120°C und einer Säurezahl im Bereich von 50 bis 350.

2. Wässrige Bindemittelzusammensetzung nach Anspruch 1, wobei das Oligomer durch radikalische Polymerisation eines oder mehrerer monoethylenisch ungesättigter Monomere mit einer Wasserlöslichkeit < 30g/l bei 25°C und 1 bar und einem oder mehrerer ethylenisch ungesättigter Carbonsäuren und gegebenenfalls bis zu 10 Gew.-% bezogen auf die Gesamtmonomere in einpolymerisiert Form sonstiger Monomere erhalten wird.

3. Wässrige Bindemittelzusammensetzung nach Anspruch 1 oder 2, wobei das Oligomer durch Substanzpolymerisation erhalten wird.

4. Wässrige Bindemittelzusammensetzung nach einem der Ansprüche 1 bis 3, wobei man das Oligomer durch Substanzpolymerisation von

   (i) mindestens eines wasserlöslichen Monomers ausgewählt unter Acrylsäure, Methacrylsäure, Fumarsäure, Maleinsäureanhydrid, und Itaconsäure, insbesondere Acrylsäure und Methacrylsäure und
   (ii) mindestens eines Monomers ausgewählt unter Alkylestern der Acrylsäure, Alkylester der Methacrylsäure, Acrylamiden und ihren Derivaten, Styrol, $\alpha$-Methylstyrol, Methylmethacrylat, Butylacrylat und 2-Ethylhexylacrylat

   erhält.

5. Wässrige Bindemittelzusammensetzung nach einem der Ansprüche 1 bis 4, wobei man das Oligomer durch Substanzpolymerisation in einem Temperaturbereich von 180 bis 270°C herstellt.

6. Wässrige Bindemittelzusammensetzung nach einem der Ansprüche 1 bis 5, wobei das Oligomer eine Polydispersität $M_w/M_n$ < 5 aufweist.

7. Wässrige Bindemittelzusammensetzung nach einem der Ansprüche 1 bis 6 enthaltend:

   - wenigstens ein Polymer P mit einer Glasübergangstemperatur $T_g$ im Bereich von -20 bis + 60°C in Form einer wässrigen Polymerdispersion PD, die durch radikalische Emulsionspolymerisation wenigstens eines ethylenisch

ungesättigten Monomers M erhältlich ist und
- 0,1 bis 10 Gew.-% bezogen auf die Summe aus Polymer P und Oligomer, eines oder mehrerer aus ethylenisch ungesättigtzen Monomeren aufgebauten Oligomere mit einem mittleren Molekulargewicht $M_w$ von 1000 bis 30000 g/mol und einer Glasübergangstemperatur $T_g$ im Bereich von +60 bis +120°C und einer Säurezahl im Bereich von 50 bis 350 und
- 0,01 bis 15 Gew.-%, bevorzugt 0,02 bis 10 Gew.-%, Polystyrol bezogen auf das Gesamtbindemittel (fest).

**8.** Wässrige Bindemittelzusammensetzung nach einem der Ansprüche 1 bis 7, wobei zur Emulsionspolymerisation mindestens 80 Gew.-%, bevorzugt mindestens 85 Gew.-%, besonders bevorzugt mindestens 90 Gew.-%, bezogen auf das Gesamtgewicht der Monomere M, eines monoethylenisch ungesättigten Monomers M1 (Hauptmonomer) mit einer Wasserlöslichkeit < 30g/l eingesetzt werden.

**9.** Wässrige Bindemittelzusammensetzung nach einem der Ansprüche 1 bis 8, wobei zur Emulsionspolymerisation zusätzlich zu wenigstens einem Hauptmonomer M1 bis zu 20 Gew.-%, bezogen auf das Gesamtgewicht der Monomere M, eines oder mehrerer Monomere M2 eingesetzt wird, das eine Wasserlöslichkeit ≥30 g/l aufweist.

**10.** Wässrige Bindemittelzusammensetzung nach einem der Ansprüche 8 oder 9, wobei zusätzlich zur Emulsionspolymerisation 0,5 bis 15 Gew.-% , bezogen auf das Gesamtgewicht der Monomere M, wenigstens eines Polyether(meth)acrylats eingesetzt wird.

**11.** Wässrige Bindemittelzusammensetzung nach einem der Ansprüche 8 bis 10, wobei zusätzlich zur Emulsionspolymerisation 0,5 bis 15 Gew.-%, bezogen auf das Gesamtgewicht der Monomere M, wenigstens eines Harnstoffgruppen aufweisenden Monomers eingesetzt wird.

**12.** Beschichtungsmittel in Form einer wässrigen Zusammensetzung enthaltend:

- 10 bis 60 Gew.-% wenigstens eines Polymers P mit einer Glasübergangstemperatur $T_g$ im Bereich von -20 bis + 60°C, das durch radikalische Emulsionspolymerisation wenigstens eines ethylenisch ungesättigten Monomers M erhältlich ist und
- 0,1 bis 10 Gew.-% bezogen auf die Summe aus Polymer P und Oligomer, eines oder mehrerer aus ethylenisch ungesättigten Monomeren aufgebauter Oligomere mit einem mittleren Molekulargewicht $M_w$ von 1000 bis 30000 g/mol und einer Glasübergangstemperatur $T_g$ im Bereich von +60 bis +120°C und einer Säurezahl im Bereich von 50 bis 350,
- bis zu 70 Gew.-% anorganische Füllstoffe und/oder anorganische Pigmente,
- 0,1 bis 20 Gew.-% übliche Hilfsmittel, und
- Wasser auf 100 Gew.-%.

**13.** Beschichtungsmittel nach Anspruch 12 in Form einer Hochglanzfarbe mit einer Pigmentvolumenkonzentration (PVK) im Bereich von 12 bis 30, vorzugsweise im Bereich von 15 bis 30.

**14.** Verfahren zur Herstellung von Beschichtungen mit erhöhtem Glanz, bei dem man auf ein Substrat ein wässriges Beschichtungsmittel gemäß Anspruch 12 aufträgt.

**15.** Verwendung von Oligomeren mit einem mittleren Molekulargewicht $M_w$ von 1000 bis 30 000 g/mol und einer Glasübergangstemperatur $T_g$ im Bereich von +60 bis +120°C und einer Säurezahl im Bereich von 50 bis 350, in Mischung mit einer Polymerdispersion wie in den Ansprüche 1, 8 bis 11 definiert, zur Erhöhung des Glanzes der daraus hergestellten Beschichtungen.

## Claims

**1.** An aqueous binder composition comprising:

- at least one polymer P having a glass transition temperature $T_g$ in the range from -20 to + 60°C, in the form of an aqueous polymer dispersion PD which is obtainable by free-radical emulsion polymerization of at least one ethylenically unsaturated monomer M, and
- 0.1 to 10% by weight, based on the sum of polymer P and oligomer, of one or more oligomers which are composed of ethylenically unsaturated monomers and have an average molecular weight $M_w$ of 1000 to 30 000

g/mol, a glass transition temperature $T_g$ in the range from +60 to +120°C, and an acid number in the range from 50 to 350.

2. The aqueous binder composition according to Claim 1, the oligomer being obtained by free-radical polymerization of one or more monoethylenically unsaturated monomers having a water solubility < 30g/l at 25°C and 1 bar and one or more ethylenically unsaturated carboxylic acids, and, optionally, up to 10% by weight, based on the overall monomers in copolymerized form, of other monomers.

3. The aqueous binder composition according to Claim 1 or 2, the oligomer being obtained by bulk polymerization.

4. The aqueous binder composition according to any of Claims 1 to 3, the oligomer being obtained by bulk polymerization of

(i) at least one water-soluble monomer selected from acrylic acid, methacrylic acid, fumaric acid, maleic anhydride, and itaconic acid, especially acrylic acid and methacrylic acid, and
(ii) at least one monomer selected from alkyl esters of acrylic acid, alkyl esters of methacrylic acid, acrylamides and derivatives thereof, styrene, α-methylstyrene, methyl methacrylate, butyl acrylate, and 2-ethylhexyl acrylate.

5. The aqueous binder composition according to any of Claims 1 to 4, the oligomer being prepared by bulk polymerization in a temperature range from 180 to 270°C.

6. The aqueous binder composition according to any of Claims 1 to 5, the oligomer having a polydispersity $M_w/M_n$ < 5.

7. The aqueous binder composition according to any of Claims 1 to 6, comprising:

- at least one polymer P having a glass transition temperature $T_g$ in the range from -20 to + 60°C, in the form of an aqueous polymer dispersion PD which is obtainable by free-radical emulsion polymerization of at least one ethylenically unsaturated monomer M, and
- 0.1 to 10% by weight, based on the sum of polymer P and oligomer, of one or more oligomers which are composed of ethylenically unsaturated monomers and have an average molecular weight $M_w$ of 1000 to 30 000 g/mol, a glass transition temperature $T_g$ in the range from +60 to +120°C, and an acid number in the range from 50 to 350, and
- 0.01% to 15% by weight, preferably 0.02% to 10% by weight, of polystyrene, based on the overall binder (solids).

8. The aqueous binder composition according to any of Claims 1 to 7, the emulsion polymerization being carried out using at least 80%, preferably at least 85%, more preferably at least 90%, by weight, based on the overall weight of the monomers M, of a monoethylenically unsaturated monomer M1 (principal monomer) having a water solubility < 30 g/l.

9. The aqueous binder composition according to any of Claims 1 to 8, the emulsion polymerization being carried out using, in addition to at least one principal monomer M1, up to 20% by weight, based on the overall weight of the monomers M, of one or more monomers M2 having a water solubility ≥30 g/l.

10. The aqueous binder composition according to either of Claims 8 and 9, the emulsion polymerization being carried out using additionally 0.5% to 15% by weight, based on the overall weight of the monomers M, of at least one polyether (meth)acrylate.

11. The aqueous binder composition according to any of Claims 8 to 10, the emulsion polymerization being carried out using additionally 0.5% to 15% by weight, based on the overall weight of the monomers M, of at least one monomer containing urea groups.

12. A coating material in the form of an aqueous composition comprising:

- 10% to 60% by weight of at least one polymer P having a glass transition temperature $T_g$ in the range from -20 to + 60°C, which is obtainable by free-radical emulsion polymerization of at least one ethylenically unsaturated monomer M, and
- 0.1 to 10% by weight, based on the sum of polymer P and oligomer, of one or more oligomers which are composed of ethylenically unsaturated monomers and have an average molecular weight $M_w$ of 1000 to 30 000

g/mol, a glass transition temperature $T_g$ in the range from +60 to +120°C, and an acid number in the range from 50 to 350,
- up to 70% by weight of inorganic fillers and/or inorganic pigments,
- 0.1% to 20% by weight of typical auxiliaries, and
- water to 100% by weight.

**13.** The coating material according to Claim 12 in the form of a high-gloss paint having a pigment volume concentration (PVC) in the range from 12 to 30, preferably in the range from 15 to 30.

**14.** A method of producing coatings featuring increased gloss, wherein an aqueous coating material according to Claim 12 is applied to a substrate.

**15.** The use of oligomers having an average molecular weight $M_w$ of 1000 to 30 000 g/mol, a glass transition temperature $T_g$ in the range from +60 to +120°C, and an acid number in the range from 50 to 350, in a mixture with a polymer dispersion as defined in any of Claims 1 and 8 to 11, to increase the gloss of the coatings produced therefrom.

**Revendications**

**1.** Composition aqueuse de liant contenant :

- au moins un polymère P ayant une température de transition vitreuse $T_g$ dans la plage de -20 à +60 °C, sous forme d'une dispersion aqueuse de polymère DP qui peut être obtenue par polymérisation en émulsion radicalaire d'au moins un monomère à insaturation éthylénique M et
- 0,1 à 10 % en poids, par rapport à la somme de polymère P et d'oligomère, d'un ou de plusieurs oligomères constitués de monomères à insaturation éthylénique, ayant une masse moléculaire moyenne $M_w$ de 1 000 à 30 000 g/mole et une température de transition vitreuse $T_G$ dans la plage de +60 à +120 °C et un indice d'acide dans la plage de 50 à 350.

**2.** Composition aqueuse de liant selon la revendication 1, dans laquelle l'oligomère est obtenu par polymérisation radicalaire d'un ou de plusieurs monomères à insaturation monoéthylénique ayant une solubilité dans l'eau < 30 g/l à 25 °C et sous 1 bar et d'un ou de plusieurs acides carboxyliques à insaturation éthylénique et éventuellement de jusqu'à 10 % en poids, par rapport aux monomères totaux, d'autres monomères sous forme incorporés par polymérisation.

**3.** Composition aqueuse de liant selon la revendication 1 ou 2, dans laquelle l'oligomère est obtenu par polymérisation en masse.

**4.** Composition aqueuse de liant selon l'une quelconque des revendications 1 à 3, dans laquelle on obtient l'oligomère par polymérisation en masse de

(i) au moins un monomère hydrosoluble choisi parmi l'acide acrylique, l'acide méthacrylique, l'acide fumarique, l'anhydride maléique et l'acide itaconique, en particulier l'acide acrylique et l'acide méthacrylique et
(ii) au moins un monomère choisi parmi des esters alkyliques de l'acide acrylique, des esters alkyliques de l'acide méthacrylique, des acrylamides et leurs dérivés, le styrène, l'$\alpha$-méthylstyrène, le méthacrylate de méthyle, l'acrylate de butyle et l'acrylate de 2-éthyl-hexyle.

**5.** Composition aqueuse de liant selon l'une quelconque des revendications 1 à 4, dans laquelle on prépare l'oligomère par polymérisation en masse dans une plage de température de 180 à 270 °C.

**6.** Composition aqueuse de liant selon l'une quelconque des revendications 1 à 5, dans laquelle l'oligomère présente une polydispersité $M_w/M_n$ < 5.

**7.** Composition aqueuse de liant selon l'une quelconque des revendications 1 à 6, contenant :

- au moins un polymère P ayant une température de transition vitreuse $T_g$ dans la plage de -20 à +60 °C, sous forme d'une dispersion aqueuse de polymère DP qui peut être obtenue par polymérisation en émulsion radicalaire d'au moins un monomère à insaturation éthylénique M et

- 0,1 à 10 % en poids, par rapport à la somme de polymère P et d'oligomère, d'un ou de plusieurs oligomères constitués de monomères à insaturation éthylénique, ayant une masse moléculaire moyenne $M_w$ de 1 000 à 30 000 g/mole et une température de transition vitreuse $T_g$ dans la plage de +60 à +120 °C et un indice d'acide dans la plage de 50 à 350 et
- 0,01 à 15 % en poids, de préférence 0,02 à 10 % en poids, de polystyrène, par rapport au liant total (solide).

**8.** Composition aqueuse de liant selon l'une quelconque des revendications 1 à 7, dans laquelle on utilise dans la polymérisation en émulsion au moins 80 % en poids, de préférence au moins 85 % en poids, de façon particulièrement préférée au moins 90 % en poids, par rapport au poids total des monomères M, d'un monomère à insaturation monoéthylénique M1 (monomère principal) ayant une solubilité dans l'eau < 30 g/l.

**9.** Composition aqueuse de liant selon l'une quelconque des revendications 1 à 8, dans laquelle on utilise dans la polymérisation en émulsion en addition d'au moins un monomère principal M1 jusqu'à 20 % en poids, par rapport au poids total des monomères M, d'un ou de plusieurs monomères M2 qui présente(nt) une solubilité dans l'eau ≥ 30 g/l.

**10.** Composition aqueuse de liant selon l'une quelconque des revendications 8 ou 9, dans laquelle on utilise en outre dans la polymérisation en émulsion 0,5 à 15 % en poids, par rapport au poids total des monomères M, d'au moins un polyéther(méth)acrylate.

**11.** Composition aqueuse de liant selon l'une quelconque des revendications 8 à 10, dans laquelle on utilise en outre dans la polymérisation en émulsion 0,5 à 15 % en poids, par rapport au poids total des monomères M, d'au moins un monomère comportant des groupes urée.

**12.** Produit de revêtement sous forme d'une composition aqueuse contenant :

- 10 à 60 % en poids d'au moins un polymère P ayant une température de transition vitreuse $T_g$ dans la plage de -20 à +60 °C, qui peut être obtenu par polymérisation en émulsion radicalaire d'au moins un monomère à insaturation éthylénique M et
- 0,1 à 10 % en poids, par rapport à la somme de polymère P et d'oligomère, d'un ou de plusieurs oligomères constitués de monomères à insaturation éthylénique, ayant une masse moléculaire moyenne $M_w$ de 1 000 à 30 000 g/mole et une température de transition vitreuse $T_g$ dans la plage de +60 à +120 °C et un indice d'acide dans la plage de 50 à 350,
- jusqu'à 70 % en poids de charges inorganiques et/ou de pigments inorganiques,
- 0,1 à 20 % en poids d'adjuvants usuels, et
- de l'eau en complément à 100 % en poids.

**13.** Produit de revêtement selon la revendication 12, sous forme de peinture très brillante ayant une concentration pigmentaire volumique (CPV) dans la plage de 12 à 30, de préférence dans la plage de 15 à 30.

**14.** Procédé pour la production de revêtements à brillant élevé, dans lequel on applique sur un subjectile un produit aqueux de revêtement selon la revendication 12.

**15.** Utilisation d'oligomères ayant une masse moléculaire moyenne $M_w$ de 1 000 à 30 000 g/mole et une température de transition vitreuse $T_g$ dans la plage de +60 à +120 °C et un indice d'acide dans la plage de 50 à 350, en mélange avec une dispersion de polymère telle que définie dans les revendications 1, 8 à 11, pour accroître le brillant des revêtements produits à partir de celle-ci.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 693540 A
- EP 525977 A
- WO 2006079453 A
- WO 03082999 A
- WO 2006118974 A
- JP 2007145990 B
- WO 2005121595 A
- US 4414370 A
- US 4529787 A
- US 4546160 A
- WO 9925780 A
- US 4733005 A
- DE 2722097 A
- US 4226007 A
- DE 2061213 A
- DE 2207209 A
- WO 9325588 A
- US 4269749 A
- EP 40419 B
- EP 614922 A
- EP 567812 A


### In der Beschreibung aufgeführte Nicht-Patentliteratur


- Ullmann’s Encyclopedia of Industrial Chemistry. VCH, 1992, vol. A 21, 169
- **ZOSEL.** *Farbe und Lack,* 1976, vol. 82, 125-134
- Ullmanns Enzyklopädie der technischen Chemie. 1980, vol. 19, 17, , 18
- **J. BRANDRUP ; E.H. IMMERGUT.** Polymer Handbook. J. Wiley, 1989
- **U. POTH.** *Polyester und Alkydharze,* 2005, 183 f
- **VON K. C. BERGER ; G. BRANDRUP.** Polymer Handbook. John Wiley & Sons, 1989, II/81-II/141
- Methoden der organischen Chemie. **HOUBEN-WEYL.** Makromolekulare Stoffe. Georg Thieme Verlag, 1961, vol. XIV/1, 411-420
- Methoden der organischen Chemie. **HOUBEN-WEYL.** Makromolekulare Stoffe. Georg Thieme Verlag, 1961, vol. 14, 192-208
- Methoden der organischen Chemie. **HOUBEN-WEYL.** Makromolekulare Stoffe. Georg-Thieme-Verlag, 1961, vol. XIV/1, 192-208
- Encyclopedia of Polymer Science and Technology. John Wiley & Sons Inc, 1966, vol. 5, 847
- **U. POTH.** *Polyester und Alkydharze,* 2005